# EUROPEAN PATENT SPECIFICATION

(11) **EP 1 425 811 B1**
(45) Date of publication and mention of the grant of the patent: **21.09.2011**
(21) Application number: 02719410.9
(22) Date of filing: 01.04.2002
(51) Int. Cl.: H01M 4/62, H01M 4/50, H01M 6/04

(54) **CATHODE FOR PRIMARY ALKALINE BATTERY**
KATHODE FÜR EINE ALKALISCHE PRIMÄRBATTERIE
CATHODE pour une PILE primaire alcaline

(30) Priority: 10.04.2001 US 829709
(43) Date of publication of application: 09.06.2004
(73) Proprietor: The Gillette Company, Boston, MA 02199 (US)
(72) Inventor: ANGLIN, David, L., Brookfield, CT 06804 (US)
(74) Representative: Ebner von Eschenbach, Jennifer
(86) International application number: PCT/US2002/010205
(87) International publication number: WO 2002/084766

(56) References cited:
- EP-A- 0 962 997
- US-A- 4 663 230
- US-A- 5 246 794
- US-A- 5 506 077
- FRYSZ C A ET AL: "Carbon filaments and carbon black as a conductive additive to the manganese dioxide cathode of a lithium electrolytic cell" JOURNAL OF POWER SOURCES, ELSEVIER SEQUOIA S.A. LAUSANNE, CH, vol. 58, no. 1, 1996, pages 41-54, XP004044538 ISSN: 0378-7753
- PATENT ABSTRACTS OF JAPAN vol. 013, no. 280 (E-779), 27 June 1989 (1989-06-27) & JP 01 067865 A (MATSUSHITA ELECTRIC IND CO LTD), 14 March 1989 (1989-03-14)

## Description

The invention relates to batteries.

Batteries, or electrochemical cells, such as primary alkaline batteries, are commonly used electrical energy sources. A battery contains a negative electrode, typically called the anode, and a positive electrode, typically called the cathode. The anode contains an active material that can be oxidized; the cathode contains or consumes an active material that can be reduced. The anode active material is capable of reducing the cathode active material. In order to prevent direct reaction of the anode material and the cathode material, the anode and
the cathode are electrically isolated from each other by a separator.

When a battery is used as an electrical energy source in a device, such as a cellular telephone, electrical contact is made to the anode and the cathode, allowing electrons to flow through the device and permitting the respective oxidation and reduction reactions to occur to provide electrical power. An electrolyte in contact with the anode and the cathode contains ions that flow through the separator between the electrodes to maintain charge balance throughout the battery during discharge.

When used in devices, for example, high power devices such as some cameras, it is desirable for the battery to have good current density.

The invention relates to using carbon fibers in the cathodes of primary alkaline batteries. The carbon fibers, particularly after heat treatment, generally have higher electrical conductivity than graphite or carbon particles. In addition, they have a fibrous morphology. As a result, cathodes with carbon fibers typically have higher conductivity, e.g., lower ohmic losses, than cathodes with graphite or carbon particles. Cathodes with relatively high conductivity can be used to produce cells with relatively high current discharge capabilities and/or relatively high utilizations of the active materials.

The carbon fibers generally have high surface areas and high surface energies. These properties can provide the fibers with good wicking action to draw the electrolytic solution into the pores of the cathode. More electrolyte in the cathode, e.g., due to good wicking and/or good ionic mobility, generally improves mass transfer in the cathode and improves the performance of the battery. The fibrous morphology of the fibers can also act as a reinforcing medium to mechanically strengthen the cathode. Moreover, the carbon fibers can be produced inexpensively, which lowers the cost of producing the batteries.

In one aspect, the invention features a primary alkaline battery including a cathode having a cathode active material and carbon fibers, an anode, e.g., one having zinc as an anode active material, a separator, and an alkaline electrolyte.

The cathode includes between about 5% and about 10%, e.g., between about 5% and about 7%, of carbon fibers by weight. The cathode also comprises between about 82% to about 92%, e.g. about 84% to about 90%, or about 86% to about 88%, of manganese dioxide, by weight.

The carbon fibers have a diameter of between, about 100 nanometers and about 250 nanometers.

The carbon fibers can be heat treated, e.g., at a température greater than about 2000°C, e.g., between about 2600°C and about 3100°C.

The carbon fibers can have a length less than about 20,000 nanometers, e.g., between about 500 nanometers and about 200,000 nanometers, or between about 70,000 nanometers and about 100,000 nanometers.

The carbon fibers can include between about 1 and about 500 layers of graphite, e.g., between about 40 and about 100 layers of graphite.

The carbon fibers can have an external surface area between about 10 m²/g and about 50 m²/g, and a surface energy between about 50 mJ/m² and about 300 mJ/m²_{.}

The carbon fibers can have a graphitic index of less than about 85%.

The carbon fibers can have a length equal to or greater than an average particle size of the cathode active material.

The cathode can further include a surfactant, e.g., polyvinyl alcohol (PVA), ethylenevinyl alcohol (EVOH), and polyvinylbutyrol.

In another aspect, the invention features a primary alkaline battery having a cathode including manganese dioxide and more than about 5% of heat-treated carbon fibers having a diameter less than about 300 nanometers, an anode, a separator, and an alkaline electrolyte.

The cathode includes between about 5% and about 10%, e.g., between about 5% and about 7%, of carbon fibers by weight. The cathode can have an electrical conductivity at least 3 times greater than a cathode having about 6% of graphite.

As used herein, "fiber" refers to an elongated structure generally having a small circumference or width in proportion to a length or height. A fiber can have a substantially circular or substantially non-circular cross section and/or a smooth or rough, irregular surface. A fiber can extend generally linearly or crookedly. Examples of a fiber include a thread, a filament, and a whisker.

As used herein, "diameter" means average diameter, and "length" means average length.

Other features, objects, and advantages of the invention will be apparent from the drawings, description, and claims.
Fig. 1 is a side-sectional view of a battery; and
Fig. 2 is a plot of voltage vs. current density for multiple embodiments of cathodes.

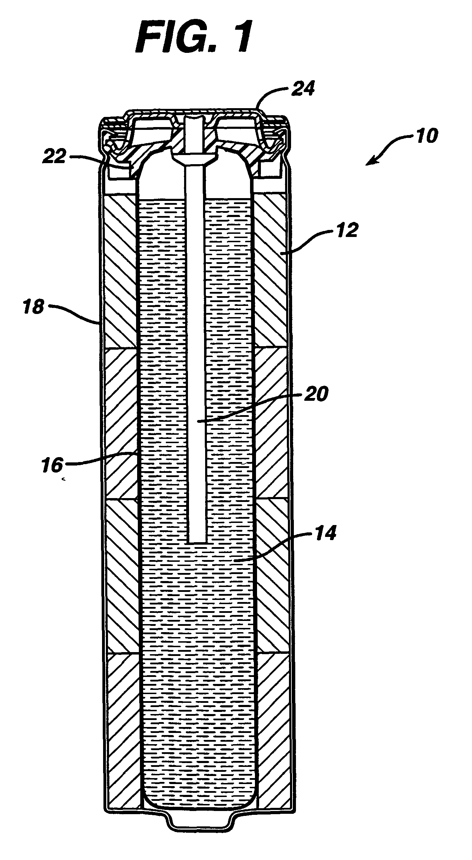

Referring to Fig. 1, battery 10 includes a cathode 12, an anode 14, a separator 16, and a cylindrical housing 18. Battery 10 also includes a current collector 20, a seal 22, and a negative metal top cap 24, which serves as the negative terminal for the battery. Cathode 12 is in contact with housing 18, and the positive terminal of battery 10 is at the opposite end of battery 10 from the negative terminal. An electrolytic solution is dispersed throughout battery 10. Battery 10 can be, for example, a AA, AAA, AAAA, C, or D battery. Cathode 12 includes manganese dioxide, carbon fibers, and a binder.

The manganese dioxide can be electrolytically-synthesized MnO₂ (EMD), or chemically-synthesized MnO₂ (CMD), or a blend of EMD and CMD. Distributors of manganese dioxides include Kerr McGee, Co. (Trona D), Chem Metals, Co., Tosoh, Delta Manganese, Mitsui Chemicals and JMC. Preferably, the manganese dioxide is EMD having a high power coefficient, as described in U.S. Application No. 09/563,447, filed May 1,2000. The cathode 12 includes between about 82% and about 92%, preferably between about 84% and about 90%, and more preferably between about 86% and about 88%, of manganese dioxide by weight.

The carbon fibers are preferably graphitic fibers made of multiple layers of graphite. Preferably, the carbon fibers contains about 1 to about 500 layers of graphite, more preferably about 40 to about 100 layers of graphite. The electrical conductivity of the fibers generally increases as the number of graphite layers in the fibers decrease. Thus, cathodes with fibers having a low number of layers typically have high conductivity compared to cathodes with fibers having a relatively high number of graphite layers. Preferably, the carbon fibers have a graphitic index of greater than about 50%, e.g., between about 50% and about 85%, e.g., about 75%. The graphitic index, a measure of the degree of graphitization of the fibers, is defined as gρ = (.3440 - D-spacing)/(.3440 - .3354), where D-spacing is the measured D-spacing of the carbon fibers in nanometers. The carbon fibers can include small amounts, e.g., less than 60 ppm, of other materials, such as, for example, iron, cobalt, and nickel.

The carbon fibers have a diameter of between about 100 to about 250 nanometers, e.g., from about 60 to about 100 nanometers. The length of the fibers is preferably at least as long as the size of the manganese dioxide particles. For example, the fibers can be about 500 nanometers to about 200,000 nanometers long.

As features of their fibrous structure or morphology, the carbon fibers have high surface areas and high surface energies. Generally, as the diameter of the fibers decreases, the surface energy of the fibers increases. In certain embodiments, the fibers can have an external surface area from about 10 m²/g to about 50 m²/g, and a surface energy from about 50 mJ/m² to about 300 mJ/m², e.g., about 100 mJ/m². It is believed that the high surface areas and energies of the fibers increase the hydrophilicity of the fibers. Increased hydrophilicity of the fibers provides the cathode with enhanced wicking action to improve the rate at which the electrolytic solution is sorbed into the cathode and the amount of electrolyte sorbed to the cathode. Increased electrolyte concentration in the cathode generally improves mass transfer within the pores of the cathode and improves performance of the battery.

In some embodiments, to further increase the hydrophilicity of the fibers, a surfactant may be added to the fibers. Examples of surfactants include, e.g., polyvinyl alcohol (PVA), ethylene-vinyl alcohol (EVOH), and polyvinylbutyrol.

Furthermore, without wishing to be bound to any theories, it is believed that the fibrous structure of the carbon fibers allow the fibers to stretch among the manganese dioxide particles, thereby increasing the contact between the fibers and the cathode active material and more effectively increasing the conductivity of the cathode. Thus, compared to, for example, graphite, it is possible to add less carbon fiber (an inert material) while maintaining a desired electrical conductivity of the cathode.

The carbon fibers are preferably heat treated before they are incorporated into the cathode. Heat treating the fibers at about 2600-3100°C, e.g., at about 2900-3000°C, generally increases the electrical conductivity of the fibers, and the conductivity, of the cathode when the fibers are later incorporated therein. It is believed that when the fibers are synthesized, a poorly conductive overcoat or layer of carbon is formed on the surface of the fibers. Heat treating the fibers converts the carbon layer to graphite to improve the conductivity of the fibers.

Cathode 12 may include more than 5% carbon fibers by weight, for example, more than 6%, or more than 7% by weight of carbon fibers. Preferably, cathode 12 includes between about 5% and about 9%, between about 5% and about 8%, between about 5% and about 7%, or about 6% by weight. Adding a relatively high concentration of carbon fibers, e.g., greater than about 7-8%, can mean increasing costs of production and decreasing the concentration of active material in the cathode, which can diminish gains in battery performance provided by the fibers.

Carbon fibers are available, for example, under the trademark PYROGRAF-III^{™} from Applied Science, Inc. (Cedarville, OH). Methods of making carbon fibers are described in U.S. Patent No. 5,594,060 and references cited therein, all of which are incorporated by reference in their entirety.

Examples of binders include polyethylene powders, polyacrylamides, Portland cement and fluorocarbon resins, such as polyvinylidenefluoride (PVDF) and polytetrafluoroethylene (PTFE). An example of polyethylene binder is sold under the tradename Coathylene HA-1681 (available from Hoescht). The cathode may include, for example, between 0.1 percent to about 1 percent of binder by weight.

Cathode 12 can include other additives. Examples of these additives are disclosed, for example, in U.S. Patent No. 5,342,712.

Cathode 12 may include, for example, from about 0.2 weight percent to about 2 percent Tio₂ weight.

The electrolyte solution also is dispersed through cathode 12, e.g., about 7% by weight. Weight percentages provided above and below are determined after the electrolyte solution has been dispersed.

Anode 14 can be formed of any of the standard zinc materials used in battery anodes. For example, anode 14 can be a zinc gel that includes zinc metal particles, a gelling agent, and minor amounts of additives, such as gassing inhibitor. In addition, a portion of the electrolyte solution is dispersed throughout the anode.

The zinc particles can be any of the zinc particle conventionally used in gel anodes. Examples of zinc particles include those described in U.S.S.N. 08/905,254, U.S.S.N. 09/115,867, and U.S.S.N. 09/156,913. The anode may include, for example, between 67% and 71% of zinc particles by weight.

Examples of gelling agents include polyacrylic acids, grafted starch materials, salts of polyacrylic acids, polyacrylates, carboxymethylcellulose or combinations thereof. Examples of such polyacrylic acids are Carbopol 940 and 934 (available from B.F. Goodrich) and Polygel 4P (available from 3V), and an example of a grafted starch material is Waterlock A221 (available from Grain Processing Corporation, Muscatine, IA). An example of a salt of a polyacrylic acid is Alcosorb G1 (available from Ciba Specialties). The anode may include, for example, from 0.1 percent to about 1 percent gelling agent by weight.

Gassing inhibitors can be inorganic materials, such as bismuth, tin, lead and indium. Alternatively, gassing inhibitors can be organic compounds, such as phosphate esters, ionic surfactants or nonionic surfactants. Examples of ionic surfactants are disclosed in, for example, U.S. Patent No. 4,777,100.

Separator 16 can have any of the conventional designs for battery separators. In some embodiments, separator 16 can be formed of two layers of non-woven, non-membrane material with one layer being disposed along a surface of the other. To minimize the volume of separator 16 while providing an efficient battery, each layer of non-woven, non-membrane material can have a basic weight of about 54 grams per square meter, a thickness of about 5.4 mils when dry and a thickness of about 10 mils when wet. In these embodiments, the separator preferably does not include a layer of membrane material or a layer of adhesive between the non-woven, non-membrane layers. Generally, the layers can be substantially devoid of fillers, such as inorganic particles.

In other embodiments, separator 16 includes an outer layer of cellophane with a layer of non-woven material. The separator also includes an additional layer of non-woven material. The cellophane layer can be adjacent cathode 12 or the anode. Preferably, the non-woven material contains from about 78 weight percent to about 82 weight percent PVA and from about 18 weight percent to about 22 weight percent rayon with a trace of surfactant. Such non-woven materials are available from PDM under the tradename PA25.

The electrolytic solution dispersed throughout battery 10 can be any of the conventional electrolytic solutions used in batteries. Typically, the electrolytic solution is an aqueous hydroxide solution. Such aqueous hydroxide solutions include potassium hydroxide solutions including, for example, between 33 and 38 by weight percent potassium hydroxide, and sodium hydroxide solutions. The electrolyte can also include about 2 by weight percent zinc oxide.

Housing 18 can be any conventional housing commonly used in primary alkaline batteries. The housing typically includes an inner metal wait and an outer electrically non-conductive material such as heat shrinkable plastic. Optionally, a layer of conductive material can be disposed between the inner wall and the cathode 12. This layer may be disposed along the inner surface of wall, along the circumference of cathode 12 or both. This conductive layer can be formed, for example, of a carbonaceous material. Such materials include LB 1000 (Timcal), Eccocoat 257 (W.R. Grace & Co.), Electrodag 109 (Acheson Colloids Co.), Electrodag 112 (Acheson) and EB0005 (Acheson). Methods of applying the conductive layer are disclosed in, for example, Canadian Patent No. 1,263,697.

Current collector 20 is made from a suitable metal, such as brass. Seal 22 can be made, for example, of nylon.

The following examples are illustrative and not intended to be limiting.

### Example 1

Cathode pellets with the following compositions were prepared:

| | | | | |
|---|---|---|---|---|
| **Sample A** | 87.8% EMD | 5% graphite | 6.9% KOH electrolyte | 0.3% binder |
| **Sample B** | 83.2% EMD | 8.4% graphite | 7.85% KOH electrolyte | 0.57% binder |
| **Sample C** | 87.8% EMD | 5% carbon fibers | 6.9% KOH electrolyte | 0.3% binder |
| **Sample D** | 83.2% EMD | 8.4% carbon fibers | 7.85% KOH electrolyte | 0.57% binder |

The EMD was Trona D, from Kerr McGee; the graphite was MP0702X, from NDG; and the binder was Coathylene. The carbon fibers were nominally 200 nm diameter, heat treated fibers, available as PF-19-HT from Applied Sciences, Inc. All percentages are based on weight.

For each sample, the cathode materials were placed in a coffee grinder and mixed until the sample was homogeneous. For example, twenty-five gram batches were mixed for ten seconds, followed by scraping of the materials off the wall of the grinder. This process was repeated three times. The samples were then pressed under about 10 tons of pressure to form pellets about 2.7 mm thick and 12.7 mm in diameter.

Impedances were about 2.25 ohm for Sample A and about 0.66 ohm for Sample B. Sample C had an impedance of about 0.25 ohm, and Sample D had an impedance of about 0.08 ohm.

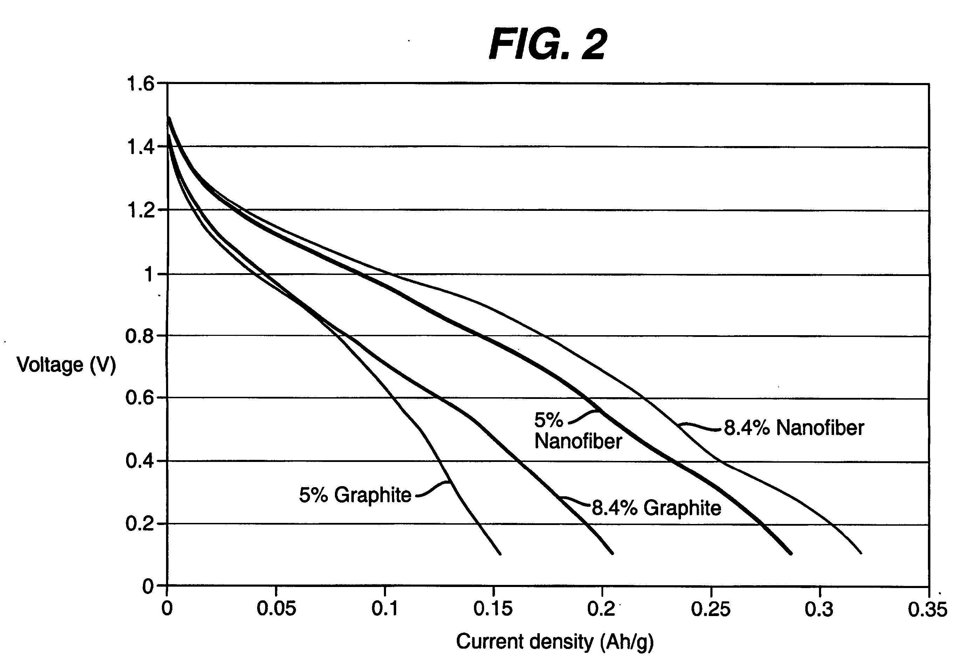

The pellets were then incorporated into cylindrical pellet cells having excess anode, as described above. The pellet cells were discharged continuously at about 90 mA, which is a discharge rate approximately equivalent to a discharge of a 1 Amp AA cylindrical cell. Discharge curves are shown in Fig. 2, which indicates that, at a 0.8 Volt cut-off, cells having carbon fibers have higher utilization of MnO₂. than cells having graphite.

In other embodiments, the carbon fibers described above can be incorporated into fuel cells and other types of batteries such as metal-air batteries and air recovery batteries.

Other embodiments are in the claims.

## Claims

1. A primary alkaline battery, comprising:
a cathode comprising between 82% and 92% of manganese dioxide; and between 5% and 10% of carbon fibers by weight;
an anode;
a separator; and
an alkaline electrolyte; and
wherein the carbon fibers have an average diameter between 100 nanometers and 250 nanometers.

2. A battery according to claim 1, wherein the cathode comprises more than 6% of carbon fibers by weight.

3. A battery according to claim 1 or 2, wherein the cathode comprises more than 7% of carbon fibers by weight.

4. A battery according to any one of the preceding claims, wherein the cathode comprises more than 8% of carbon fibers by weight.

5. A battery according to any one of the preceding claims, wherein the cathode comprises more than 9% of carbon fibers by weight.

6. A battery according claim 1, wherein the cathode comprises between 5% and 7% of carbon fibers by weight.

7. A battery according to any one of the preceding claims, wherein the cathode comprises less than 90% of cathode active material by weight.

8. A battery according to any one of the preceding claims, wherein the cathode comprises less than 88% of cathode active material by weight.

9. A battery according to claims 1 to 7, wherein the cathode comprises between 84 % and 90% of cathode active material by weight.

10. A battery according to any of the preceding claims, wherein the carbon fibers have been heat treated.

11. A battery according to claim 10, wherein the carbon fibers have been heat treated at a temperature greater than 2000°C.

12. A battery according to claims 10 or 11, wherein the carbon fibers have been heat treated at a temperature between 2600°C and 3100°C.

13. A battery according to any one of the preceding claims, wherein the carbon fibers have an average length between 500 nanometers and 200,000 nanometers.

14. A battery according to any one of the preceding claims, wherein the carbon fibers have an average length between 70,000 nanometers and 100,000 nanometers.

15. A battery according to any one of the preceding claims, wherein the carbon fibers have between about 1 and 500 layers of graphite.

16. A battery according to any one of the preceding claims, wherein the carbon fibers have between about 40 and 100 layers of graphite.

17. A battery according to any one of the preceding claims, wherein the carbon fibers have an average external surface area between 10 m²/g and 50 m²/g.

18. A battery according to any one of the preceding claims, wherein the carbon fibers have a surface energy between 50 mJ/m² and 300 mJ/m².

19. A battery according to any one of the preceding claims, wherein the carbon fibers have a graphitic index of less than 85%.

20. A battery according to any one of the preceding claims, wherein the carbon fibers have an average length equal to or greater than an average particle size of the cathode active material.

21. A battery according to any one of the preceding claims, wherein the cathode further comprises a surfactant.

22. A battery according to claim 21, wherein the surfactant is selected from a group consisting of polyvinyl alcohol, ethylene-vinyl alcohol, and polyvinylbutyrol.

23. A battery according to any one of the preceding claims, wherein the anode comprises zinc as an anode active material.

## Patentansprüche

1. Alkalische Primärbatterie, umfassend:
eine Kathode, die zwischen 82 Gew.-% und 92 Gew.-% Mangandioxid; und zwischen 5 Gew.-% und 10 Gew.-% Kohlenstofffasern umfasst;
eine Anode;
einen Separator; und
einen alkalischen Elektrolyten; und
wobei die Kohlenstofffasern einen mittleren Durchmesser zwischen 100 Nanometer und 250 Nanometern aufweisen.

2. Batterie nach Anspruch 1, wobei die Kathode zu mehr als 6 Gew.-% Kohlenstofffasern umfasst.

3. Batterie nach Anspruch 1 oder 2, wobei die Kathode zu mehr als 7 Gew.-% Kohlenstofffasern umfasst.

4. Batterie nach einem der vorstehenden Ansprüche, wobei die Kathode zu mehr als 8 Gew-% Kohlenstofffasern umfasst.

5. Batterie nach einem der vorstehenden Ansprüche, wobei die Kathode zu mehr als 9 Gew-% Kohlenstofffasern umfasst.

6. Batterie nach Anspruch 1, wobei die Kathode zwischen 5 Gew.-% und 7 Gew.-% Kohlenstofffasern umfasst.

7. Batterie nach einem der vorstehenden Ansprüche, wobei die Kathode zu weniger als 90 Gew.-% der Kathode aktives Material umfasst.

8. Batterie nach einem der vorstehenden Ansprüche, wobei die Kathode zu weniger als 88 Gew.-% der Kathode aktives Material umfasst.

9. Batterie nach Ansprüchen 1 bis 7, wobei die Kathode zwischen 84 Gew.-% und 90 Gew.-% der Kathode aktives Material umfasst.

10. Batterie nach einem der vorstehenden Ansprüche, wobei die Kohlenstofffasern wärmebehandelt wurden.

11. Batterie nach Anspruch 10, wobei die Kohlenstofffasern bei einer Temperatur von mehr als 2000 °C wärmebehandelt wurden.

12. Batterie nach Ansprüchen 10 oder 11, wobei die Kohlenstofffasern bei einer Temperatur zwischen 2600 °C und 3100 °C wärmebehandelt wurden.

13. Batterie nach einem der vorstehenden Ansprüche, wobei die Kohlenstofffasern eine durchschnittliche Länge zwischen 500 Nanometer und 200.000 Nanometer aufweisen.

14. Batterie nach einem der vorstehenden Ansprüche, wobei die Kohlenstofffasern eine durchschnittliche Länge zwischen 70.000 Nanometer und 100.000 Nanometer aufweisen.

15. Batterie nach einem der vorstehenden Ansprüche, wobei die Kohlenstofffasern zwischen ungefähr 1 und 500 Schichten Graphit aufweisen.

16. Batterie nach einem der vorstehenden Ansprüche, wobei die Kohlenstofffasern zwischen ungefähr 40 und 100 Schichten Graphit aufweisen.

17. Batterie nach einem der vorstehenden Ansprüche, wobei die Kohlenstofffasern eine durchschnittliche spezifische Außenoberfläche zwischen 10 m²/g und 50 m²/g aufweisen.

18. Batterie nach einem der vorstehenden Ansprüche, wobei die Kohlenstofffasern eine Oberflächenenergie zwischen 50 mJ/m² und 300 mJ/m² aufweisen.

19. Batterie nach einem der vorstehenden Ansprüche, wobei die Kohlenstofffasern einen Graphitindex von weniger als 85 % aufweisen.

20. Batterie nach einem der vorstehenden Ansprüche, wobei die Kohlenstofffasern eine durchschnittliche Länge aufweisen, die gleich oder größer als eine durchschnittliche Teilchengröße des aktiven Kathodenmaterials ist.

21. Batterie nach einem der vorstehenden Ansprüche, wobei die Kathode ferner ein Tensid umfasst.

22. Batterie nach Anspruch 21, wobei das Tensid ausgewählt ist aus einer Gruppe bestehend aus Polyvinylalkohol, Ethylenvinylalkohol und Polyvinylbutyrol.

23. Batterie nach einem der vorstehenden Ansprüche, wobei die Anode Zink als aktives Anodenmaterial umfasst.

## Revendications

1. Pile alcaline primaire, comprenant :
une cathode comprenant entre 82 % et 92 % de dioxyde de manganèse ; et entre 5 % et 10 % de fibres de carbone en poids ;
une anode ;
un séparateur ; et
un électrolyte alcalin ; et
dans laquelle les fibres de carbone ont un diamètre moyen compris entre 100 nanomètres et 250 nanomètres.

2. Pile selon la revendication 1, dans laquelle la cathode comprend plus de 6 % de fibres de carbone en poids.

3. Pile selon la revendication 1 ou 2, dans laquelle la cathode comprend plus de 7 % de fibres de carbone en poids.

4. Pile selon l'une quelconque des revendications précédentes, dans laquelle la cathode comprend plus de 8 % de fibres de carbone en poids.

5. Pile selon l'une quelconque des revendications précédentes, dans laquelle la cathode comprend plus de 9 % de fibres de carbone en poids.

6. Pile selon la revendication 1, dans laquelle la cathode comprend entre 5 % et 7 % de fibres de carbone en poids.

7. Pile selon l'une quelconque des revendications précédentes, dans laquelle la cathode comprend moins de 90 % de matériau actif de cathode en poids.

8. Pile selon l'une quelconque des revendications précédentes, dans laquelle la cathode comprend moins de 88 % de matériau actif de cathode en poids.

9. Pile selon les revendications 1 à 7, dans laquelle la cathode comprend entre 84 % et 90 % de matériau actif de cathode en poids.

10. Pile selon l'une quelconque des revendications précédentes, dans laquelle les fibres de carbone ont été traitées thermiquement.

11. Pile selon la revendication 10, dans laquelle les fibres de carbone ont été traitées thermiquement à une température supérieure à 2000 °C.

12. Pile selon les revendications 10 ou 11, dans laquelle les fibres de carbone ont été traitées thermiquement à une température comprise entre 2600 °C et 3100 °C.

13. Pile selon l'une quelconque des revendications précédentes, dans laquelle les fibres de carbone ont une longueur moyenne comprise entre 500 nanomètres et 200 000 nanomètres.

14. Pile selon l'une quelconque des revendications précédentes, dans laquelle les fibres de carbone ont une longueur moyenne comprise entre 70 000 nanomètres et 100 000 nanomètres.

15. Pile selon l'une quelconque des revendications précédentes, dans laquelle les fibres de carbone ont entre environ 1 et 500 couches de graphite.

16. Pile selon l'une quelconque des revendications précédentes, dans laquelle les fibres de carbone ont entre environ 40 et 100 couches de graphite.

17. Pile selon l'une quelconque des revendications précédentes, dans laquelle les fibres de carbone ont une superficie externe moyenne comprise entre 10 m²/g et 50 m²/g.

18. Pile selon l'une quelconque des revendications précédentes, dans laquelle les fibres de carbone ont une énergie de surface comprise entre 50 mJ/m² et 300 mJ/m².

19. Pile selon l'une quelconque des revendications précédentes, dans laquelle les fibres de carbone ont un indice graphitique inférieur à 85 %.

20. Pile selon l'une quelconque des revendications précédentes, dans laquelle les fibres de carbone ont une longueur moyenne égale ou supérieure à la taille moyenne des particules du matériau actif de cathode.

21. Pile selon l'une quelconque des revendications précédentes, dans laquelle la cathode comprend en outre un agent tensioactif

22. Pile selon la revendication 21, dans laquelle l'agent tensioactif est choisi parmi un groupe constitué d'alcool polyvinylique, alcool éthylène-vinylique, et polyvinylbutyrol.

23. Pile selon l'une quelconque des revendications précédentes, dans laquelle l'anode comprend du zinc en tant que matériau actif d'anode.
